# EUROPÄISCHE PATENTSCHRIFT

(11) **EP 3 003 584 B1**
(45) Veröffentlichungstag und Bekanntmachung des Hinweises auf die Patenterteilung: **20.02.2019**
(21) Anmeldenummer: 14728961.5
(22) Anmeldetag: 06.06.2014
(51) Int. Cl.: B08B 15/02, H05B 6/76, H05B 6/78, F16J 15/16

(54) **PORTALVORRICHTUNG ZUR ABSCHIRMUNG DES INNENRAUMS EINES ANLAGENGEHÄUSES**
PORTAL DEVICE FOR SHIELDING THE INTERIOR OF A SYSTEM HOUSING
DISPOSITIF À PORTIQUE POUR PROTÉGER L'INTÉRIEUR DU BOÎTIER D'UNE INSTALLATION

(30) Priorität: 07.06.2013 DE 102013105930
(43) Veröffentlichungstag der Anmeldung: 13.04.2016
(73) Patentinhaber: Dieffenbacher GmbH Maschinen- und Anlagenbau, 75031 Eppingen (DE)
(72) Erfinder: BAUSER, Helmut, 75031 Eppingen (DE)
(86) Internationale Anmeldenummer: PCT/EP2014/061829
(87) Internationale Veröffentlichungsnummer: WO 2014/195461

(56) Entgegenhaltungen:
- EP-A1- 0 637 532
- EP-A2- 1 033 181
- EP-A2- 1 661 634
- DE-A1- 1 565 802
- DE-A1-102004 055 798
- DE-U1-202013 102 453
- SU-A1- 1 452 691
- US-A- 4 468 865
- US-A- 5 092 227

## Beschreibung

Die Erfindung bezieht sich auf eine Portalvorrichtung nach Patentanspruch 1.

Das Dokument DE-A-1565802 offenbart eine Portalvorrichtung gemäß dem Stand der Technik.

Soweit in vorbekannten Anlagengehäusen, die eine Verarbeitungsanlage umgeben, Aus- bzw. Eintrittsöffnungen für einen kontinuierlich durchlaufenden Materialstrang erforderlich sind, werden diese je nach Notwendigkeit der abzuschirmenden Emissionen unmittelbar in die entsprechenden Gehäusewände integriert. Weiter werden derartige Aus- bzw. Eintrittsöffnungen an gleichförmige Materialstränge angepasst und sind nicht in der Lage auf Veränderungen der Materialstranggeometrie zu reagieren. Insbesondere gleichzeitige Höhen und Breitenänderungen sind nicht vorgesehen.

Aufgabe der vorliegenden Erfindung ist es deshalb, eine Portalvorrichtung so auszugestalten, dass sie als komplette Baugruppe an einem vorhandenen Anlagengehäuse befestigt werden kann. Insbesondere soll die Portalvorrichtung geeignet sein auf unterschiedliche Materialstranggeometrien reagieren zu können, insbesondere wenn deren Ein- und/oder Auslauf produktionsbedingt nicht immer an derselben Stelle ist.

Erfindungsgemäß wird die gestellte Aufgabe dadurch gelöst, dass eine Portalvorrichtung die Merkmalskombination nach Patentanspruch 1 aufweist.

Eine solcherart ausgebildete Portalvorrichtung kann je nach den gestellten Anforderungen zur Abschirmung der auftretenden Emissionen im Anlagengehäuse, sowohl was die Vertikal- und Horizontalkulissen anbelangt, als auch deren Lagerung betrifft, problemlos angepasst werden und insbesondere als Baugruppe dann an dem Anlagengehäuse befestigt werden.

Nach der Erfindung sollen der Querholm und die Seitenholme als U-kastenförmiges Gehäuse ausgebildet sein, zwischen dessen Wänden die Vertikal- und die Horizontalkulissen geführt sind. Diese Ausführungsform hat nicht nur den Vorteil, eine exakte Führung der Kulissen zu gewährleisten, da die Kulissenführung vor äußeren Einflüssen, die z.B. Korrosion verursachen können, geschützt sind, sondern darüber hinaus den Vorteil, dass das U-kastenförmige Gehäuse problemlos an einer Wand des auszustattenden Anlagegehäuses befestigbar ist.

Je nach den gestellten Anforderungen kann das Material des Gehäuses der Portalvorrichtung als auch der Kulissen für die abzuschirmenden Emissionen undurchlässig sein. Bei einer bevorzugten Ausführungsform handelt es sich dabei um mikrowellenundurchlässiges Material, um Mikrowellenstrahlung, die von einer Strahlungsquelle im Inneren des Anlagengehäuses ausgeht, abzuschirmen.

Eine bevorzugte Ausführungsform der erfindungsgemäßen Portalvorrichtung weist als Aktuatoren Zahnstangenantriebe mit Stellmotoren auf. Diese bewährte Aktuatorenbauart gewährleistet hohe Zuverlässigkeit und Robustheit. Es ist jedoch alternativ auch möglich, hydraulische Aktuatoren zu verwenden.

Eine zusätzliche Komplettierung der Abschirmung von Emissionen, insbesondere dann wenn es sich um Strahlungsemissionen handelt, kann dadurch erzielt werden, dass im Bereich des unteres Randes der Vertikalkulisse eine im Wesentlichen horizontal auskragende Tragkonsole befestigt ist, die ihrerseits ein aus strahlungsundurchlässigem, flexiblem Material bestehendes Schleppband aufspannt, welche auf einem durchlaufenden Materialstrang Relativbewegung zulassend aufliegt. Mit Hilfe dieser Ausführungsform kann eine Reststrahlung, die durch einen immer notwendigen Bewegungsspalt zwischen den Rändern der verwendeten Kulissen und dem durchlaufenden Materialstrang noch austreten könnte, abgeschirmt werden.

Neben oder alternativ zur Abschirmung von Emissionen von innen (aus der Anlage) heraus kann die Portalvorrichtung auch insbesondere dazu vorgesehen sein den Zutritt von (Fehl-)Luft oder anderen Schadstoffen aus der Umgebung zu vermeiden. Hierzu ist insbesondere der Fall einer abzusaugende Anlage in einem Anlagengehäuse zu nennen, der kontinuierlich ein Materialstrang zu- und abgeführt werden muss. In vorteilhafter Weise ist die vorliegende Erfindung in der Lage den Zutritt von Fehlluft von außen entlang des Materialstrangs zu reduzieren oder zu vermeiden und insbesondere Störungen des Materialstrangs durch hohe Relativgeschwindigkeiten der (durch den Unterdruck) in das Anlagengehäuse eintretenden Luft am Materialstrang entlang zu vermeiden. In diesem Zusammenhang mag es von Vorteil sein, wenn Ersatzöffnungen vorgesehen sind, die insbesondere mit einer entsprechend gewünschten Zuluft beaufschlagbar sind und mit dem Inneren des Anlagengehäuses derart verbunden sind, dass die Relativgeschwindigkeit zwischen möglichen Undichtigkeiten zwischen der Portalvorrichtung und dem Materialstrang sich nicht schädlich auf den Materialstrang selbst auswirken.

Anhand der beigefügten Zeichnungen wird ein Ausführungsbeispiel der Erfindung näher erläutert.

In den Zeichnungen zeigt:
- Fig. 1: in einer schematischen Darstellung eine Verarbeitungsanlage für einen kontinuierlich durchlaufenden Materialstrang mit einem Anlagengehäuse, an dem Portalvorrichtungen angeordnet sind,
- Fig. 2: das Schrägbild einer Portalvorrichtung als Gesamtbaugruppe, die an
- der: Eintrittsöffnung eines Anlagengehäuses befestigbar ist,
- Fig. 3: eine Darstellung entsprechend Fig. 1, bei der die Vorderwand 12 der Portalvorrichtung weggelassen ist,
- Fig. 4: eine Schnittansicht der Portalvorrichtung nach Fig. 2 mit Blickrichtung in Durchlaufrichtung D in Fig. 1,
- Fig. 5: eine Draufsicht auf die Portalvorrichtung gemäß Pfeil A nach Fig. 3,
- Fig. 6a: eine Seitenansicht der Portalvorrichtung gemäß Pfeil S nach Fig. 3 und
- Fig. 6b: eine Seitenansicht einer Portalvorrichtung für die Austrittsöffnung eines Anlagengehäuses.

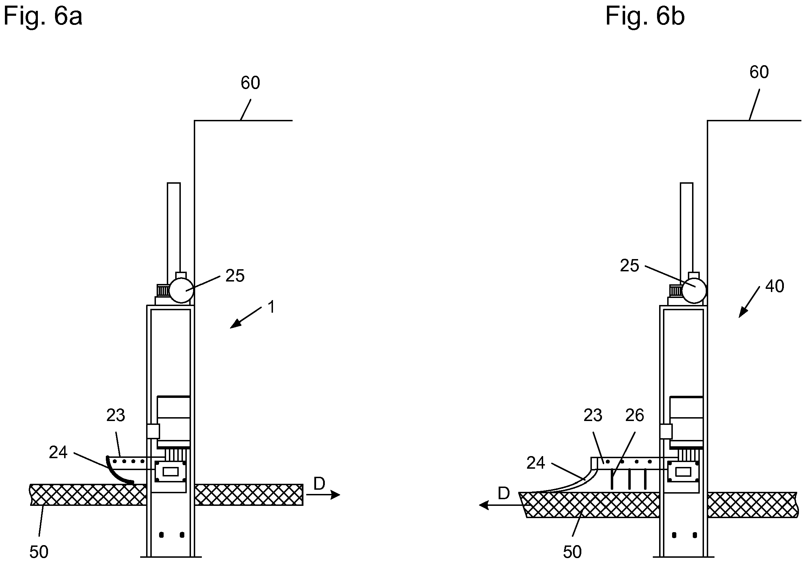

In der in Fig. 6 schematisch dargestellten Verarbeitungsanlage 80 soll ein Materialstrang 50 u. a. mittels eines Mikrowellenofens 70 behandelt werden. Die Durchlaufrichtung des Materialstranges 50 ist mit D eingezeichnet. Insbesondere bei der Herstellung von Werkstoffplatten kann nach dem Mikrowellenofen noch ein kontinuierlich arbeitende Presse 100 angeordnet sein, die einen durch den Mikrowellenofen 70 erwärmten Materialstrang 50, vorzugsweise aus Fasern, Spänen oder andere biogener Masse bestehend, mittels Druck und Wärme aushärtet. Die Verarbeitungsanlage 80 ist in diesem ersten Ausführungsbeispiel von einem Anlagengehäuse 60 eingeschlossen, das lediglich einen Eintritt bzw. einen Austritt des Materialstranges 50 durch die Portalvorrichtungen 1, 40 zulässt. Das Anlagengehäuse 60 hat hierbei im Wesentlichen die Aufgabe die Mikrowellenstrahlung, die aus dem Mikrowellenofen 70 austritt, gegenüber der Umwelt abzuschirmen. Bei einem voll geschirmten Mikrowellenofen kann das Anlagengehäuse 60 in erster Linie dazu dienen die Reststrahlung, die aus einem derartigen Mikrowellenofen 70 trotz Abschirmung, beispielsweise durch die Ein- und Austrittschleusen, austreten, ebenfalls zurückzuhalten. Dies kann bei derartigen Anlagen notwendig sein um notwendige Grenzwerte gegenüber der Umgebung einzuhalten. Alternativ oder in Kombination kann das Anlagengehäuse 60 als Absaughaube fungieren, wobei über eine Abluftvorrichtung 81 entsprechend Emissionen von der darin enthaltenen Verarbeitungsanlage, hier die kontinuierlich arbeitenden Presse 100, abgesaugt um diese gemäß den Emissionsvorschriften zu reinigen. Es kann weiter vorgesehen sein die Abluft durch eine Zuluftvorrichtung 82 zu substituieren. Dennoch wird in diesem Falle ein gewisser Unterdruck im Anlagengehäuse 60 notwendig sein, um den Luftstrom von der Zuluftvorrichtung 82 zur Abluftvorrichtung 81 zu führen. In diesem Zusammenhang kann es auch notwendig sein, mittels der Portalvorrichtungen 1, 40 den Ein- und Austritt des Materialstranges abzuschirmen, um keine Fehlluft aus der Umgebung in das Anlagengehäuse einzubringen. Auch wenn die Portalvorrichtungen 1, 40 nicht luftdicht abschirmen können, so ist es doch möglich Luftströmungen im Anlagengehäuse 60 effizienter zu steuern. Der Materialstrang 50 kann ein- und austrittseitig, je nach Beschaffenheit des Materialstrangs 50, mit einem Transportband 90 geführt sein.

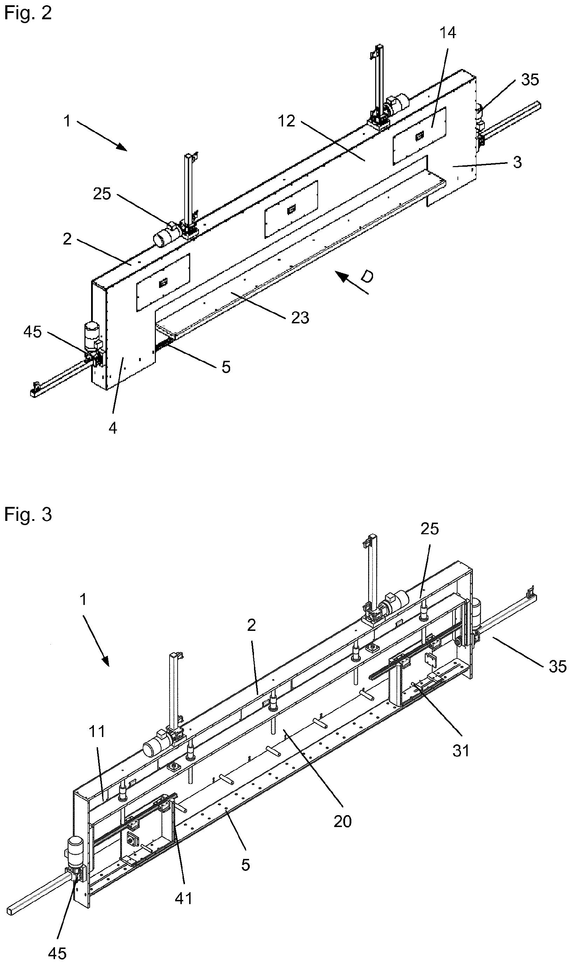

Wie aus dem Schrägbild gemäß der Figuren 2 und 3 erkennbar, umfasst die Portalvorrichtung 1 einen oberen Querholm 2, an dessen Enden U-förmig Seitenholme 3, 4 anschließen. Die freien Enden der Seitenholme 3, 4 sind mit einem Tischholm 5 verbunden. Dieser Tischholm 5 dient als Anschlag- bzw. Auflage für einen Materialstrang 50 respektive einem transportierenden Transportband 90, der oder das durch die Portalvorrichtung 1 in das Innere des Anlagengehäuse 60 hineinläuft und am anderen Ende des Anlagengehäuse 60 durch die Portalvorrichtung 40 wieder austritt.

Querholm 2 und Seitenholme 3, 4 sind als U-kastenförmiges Gehäuse ausgebildet mit einer vorderen Deckwand 12 und einer hinteren Deckwand 11 (Figur 3). Zwischen diesen Wänden sind eine Vertikalkulisse 21 sowie eine rechte Horizontalkulisse 31 und eine linke Horizontalkulisse 41 gelagert. In der vorderen Deckwand 12 sind Wartungsdeckel 14 vorgesehen, die einen Zugang zu den im Inneren des Gehäuses befindlichen Elementen zulassen.

Einzelheiten der Lagerung sind aus Fig. 3 erkennbar, die eine Darstellung entsprechend Fig. 2, jedoch mit entfernter Deckwand 12 zeigt. Die Vertikalkulisse 21 wird mittels der Vertikalaktuatoren 25 bewegt, die im gezeigten Ausführungsbeispiel als Zahnstangenantriebe mit Zahnstangen und Stellmotoren ausgebildet sein können. Auch die Bewegung der Horizontalkulissen 31, 41 erfolgt im gezeigten Ausführungsbeispiel mittels als Zahnstangenantrieben ausgeführten Horizontalaktuatoren 35, 45. Anstelle der Zahnstangenantriebe könnten auch entsprechende hydraulische Aktuatoren vorgesehen sein. Zur besseren Führung der Vertikalkulisse sind Führungsbolzen 20 vorgesehen. Die Horizontalkulissen 31, 41 sind unabhängig voneinander und unabhängig von der Vertikalkulisse 21 verschiebbar und die Aktuatoren 35, 45 und 25 sind unabhängig voneinander ansteuerbar. Eine hierzu notwendige Ansteuerungsvorrichtung, die vorzugsweise vertikal und horizontal Sensoren zur Abtastung der Dicke und der Breite des Materialstranges 50 aufweisen, kann an der Portalvorrichtung 1, 40 selbst angebracht sein, sie kann jedoch auch an anderer Stelle des Anlagengehäuses 60 oder in einer entsprechenden Schaltwarte vorgesehen sein. In den Zeichnungen ist die Steuerungsanlage weggelassen.

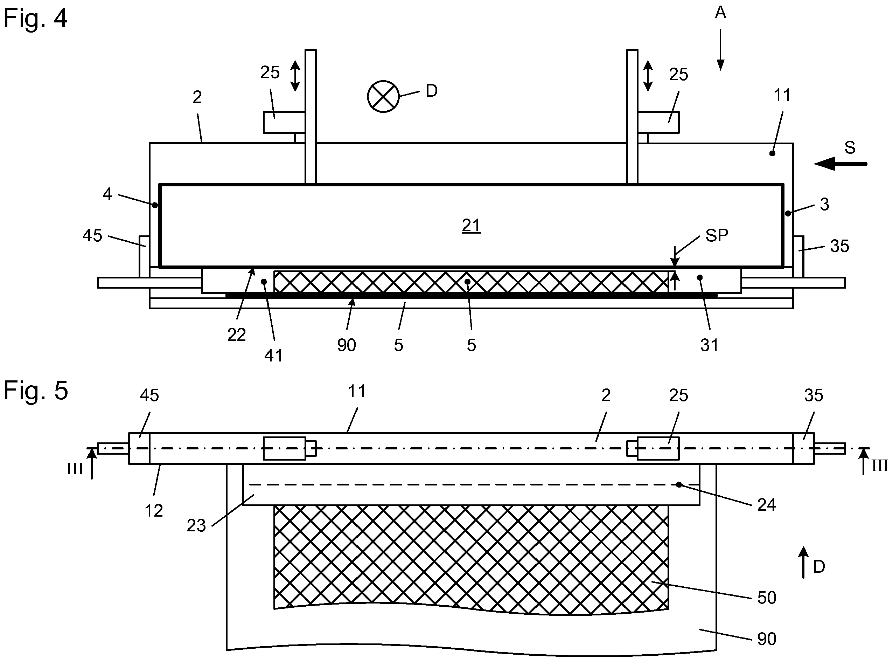

In der Frontansicht nach Figuren 4 sind gleiche Teile mit gleichen Bezugszeichen versehen wie in den Figuren 2 und 3. Zur Veranschaulichung der Wirkungsweise der Portalvorrichtung ist in Fig. 4 ein Materialstrang 50 kreuzschraffiert eingezeichnet. Es ist erkennbar, dass die Horizontalkulissen 31, 41 bis auf einen minimalen Bewegungsspalt (nicht eingezeichnet) an die Seiten des Materialstranges 50 herangefahren sind. Die Vertikalkulisse 21 befindet sich in dieser Ansicht noch nicht in ihrer Endstellung und bildet einen sichtbaren Bewegungsspalt SP.

Durch weiteres Absenken der Vertikalkulisse 21 mittels der Aktuatoren 25 kann dieser Bewegungsspalt noch weiter verkleinert werden.

In der Draufsicht nach Fig. 5 ist eine Ausführungsform dargestellt, bei der im Bereich des unteren Randes 22 (vgl. Figur 4) der Vertikalkulisse 21 eine horizontal auskragende Tragkonsole 23 befestigt ist, die entgegen der Durchlaufrichtung D der Portalvorrichtung vorsteht und weitere Abschirmungsmaßnahmen oder Messvorrichtungen enthalten kann. Der Abstand vom unteren Bereich 22 der Vertikalkulisse bzw. vom Materialstrang 50 ist den Umständen entsprechend auszulegen. In der Draufsicht ist auch ein etwaiges Transportband 90 deutlicher erkennbar, das den Materialstrang 50 durch oder bis zur Verarbeitungsanlage transportiert. Bevorzugt, aber nicht zwingend kann das Transportband spaltlos unterhalb der Horizontalkulissen hindurchfahren (vgl. Figur 4).

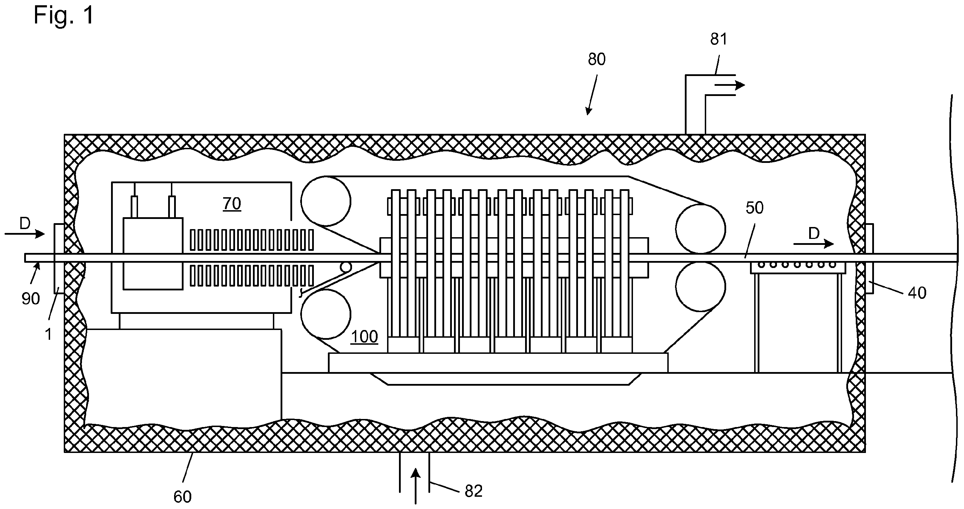

In den dargestellten Seitenansichten nach den Figuren 6a und 6b findet sich die Tragkonsole 23 deutlicher. Die Seitenansicht nach Fig. 6a zeigt die Portalvorrichtung 1, wie sie am Eintritt des Anlagengehäuses 60 (vgl. Fig. 1) vorgesehen ist. Die Seitenansicht nach Figur 6b zeigt die Portalvorrichtung 40 am Auslass des Anlagengehäuses 60. Dabei sind die verschiedenen Ausführungsformen entsprechend alternativ ebenfalls anwendbar und nur beispielhaft. Besonders vorteilhaft ist aber, wenn die Tragkonsole gegenüber dem Anlagengehäuse 60 nach außen zur Umgebung hin ausgerichtet ist. Dies hat den Vorteil, dass Ablagerungen auf der Tragkonsole, wie Staub oder dgl., einfach gereinigt werden können und innerhalb des Anlagengehäuses nicht zu unkalkulierbaren Problemen führen können. An der Tragkonsole 23 ist ein flexibles Schleppband 24 aufgespannt, welches über die gesamte Breite der Tragkonsole 23 reicht. Das Schleppband 24 ist erkennbar so gestaltet, dass es auf einem durchlaufenden Materialstrang 50 eine Relativbewegung zulassend, aufliegt. Bevorzugt soll dabei die Oberfläche des Materialstrangs 50 nicht gestört werden.

Bei der in Fig. 6b dargestellten Ausführungsform sind an der Unterseite der Tragkonsole 23 mehrere voneinander beabstandete im Wesentlichen vertikal ausgerichtete und sich ebenfalls über die gesamte Breite der Vertikalkulisse 23 erstreckende Abschirmbleche 26 befestigt. Es ist erkennbar, dass eine bezogen auf Fig. 6b, aus dem Inneren des Anlagengehäuses 60 kommende Mikrowellenstrahlung durch die Strahlungsabschirmbleche 26 und das Schleppband 24 vollkommen abgeschirmt wird.

### Bezugszeichenliste :

- 1: Portalvorrichtung
- 2: Querholm
- 3: Seitenholm
- 4: Seitenholm
- 5: Tischholm
- 11: Deckwand hinten
- 12: Deckwand vorne
- 14: Wartungsdeckel
- 20: Führungsbolzen
- 21: Vertikalkulisse
- 22: Rand unten
- 23: Tragkonsole
- 24: Schleppband
- 25: Vertikalaktuatoren
- 26: Abschirmbleche
- 31: Horizontalkulisse rechts
- 35: Horizontalaktuator rechts
- 40: Portalvorrichtung
- 41: Horizontalkulisse links
- 45: Horizontalaktuator links
- 50: Materialstrang
- 60: Anlagengehäuse
- 70: Mikrowellenofen
- 80: Verarbeitungsanlage
- 81: Abluftvorrichtung
- 82: Zuluftvorrichtung
- 90: Transportband
- 100: Presse
- SP: Bewegungsspalt
- D: Durchlaufrichtung

## Patentansprüche

1. Portalvorrichtung (1,40) zur Abschirmung des Innenraums eines Anlagengehäuses einer Verarbeitungsanlage (80) bei der Verarbeitung eines kontinuierlich durchlaufenden Materialstranges (50),
zur Befestigung im Bereich von Ein- bzw. Austrittsöffnungen des Anlagengehäuses (60) mit einem oberen Querholm (2), sich an beiden Enden daran U-förmig anschließenden Seitenholmen (3, 4) und einem die unteren freien Enden der Seitenholme (3, 4) verbindenden Tischholm (5), welcher als Auflage für den Materialstrang (50) oder ein Transportband (90) angepasst ist, wobei am oberen Querholm (2) eine vertikal verschiebbare mit einem horizontal verlaufenden unteren Rand (22) versehene Vertikalkulisse (21) geführt und mittels Vertikalaktuatoren (25) bewegbar ist und an den Seitenholmen (3, 4) horizontal verschiebbare und mittels Horizontalaktuatoren (35, 45) verschiebbare Horizontalkulissen (31, 41) geführt sind,
wobei die Horizontalkulissen (31,41) unabhängig von der Vertikalkulisse (21) bewegbar gelagert sind und wobei der Querholm (2) und die Seitenholme (3, 4) als U-kastenförmiges Gehäuse ausgebildet sind, zwischen dessen Wänden (11, 12) die Vertikal- (21) und die Horizontalkulissen (31, 41) geführt sind.

2. Vorrichtung nach Anspruch 1, **dadurch gekennzeichnet, dass** sowohl das Anlagengehäuse (60) als auch die die Vertikal- (21) und die Horizontalkulissen (31, 41) aus Material bestehen, welches für die Abschirmung geeignet ist.

3. Vorrichtung nach Anspruch 2, **dadurch gekennzeichnet, dass** sowohl das Anlagengehäuse (60) als auch die Vertikal- (21) und die Horizontalkulissen (31, 41) aus mikrowellenundurchlässigem Material bestehen.

4. Vorrichtung nach den Ansprüchen 1 bis 3, **dadurch gekennzeichnet, dass** die Aktuatoren (25, 35, 45) als Zahnstangenantriebe mit Stellmotoren ausgebildet sind.

5. Vorrichtung nach den Ansprüchen 1 bis 4, **dadurch gekennzeichnet, dass** im Bereich des unteren Randes (22) der Vertikalkulisse (21) eine im Wesentlichen horizontal auskragende Tragkonsole (23) befestigt ist, die ihrerseits ein aus Mikrowellen undurchlässigem flexiblen Material bestehendes Schleppband (24) so aufspannt, dass es auf einem durchlaufenden Materialstrang eine Relativbewegung zulassend aufliegt.

6. Vorrichtung nach den Ansprüchen 1 bis 5, **dadurch gekennzeichnet, dass** die Tragkonsole (23) an ihrer Unterseite mehrere voneinander beabstandete im Wesentlichen vertikal ausgerichtete und sich über die Breite der Vertikalkulisse (21) erstreckende Abschirmbleche (26) aufweist.

7. Vorrichtung nach den Ansprüchen 1 bis 6, **dadurch gekennzeichnet, dass** die Horizontalkulissen (31,41) unabhängig voneinander bewegbar gelagert sind.

8. Vorrichtung nach den Ansprüchen 1 bis 7, **dadurch gekennzeichnet, dass** für einen abrollenden Kontakt mit dem Materialstrang (50) an der Vertikal- (21) und/oder den Horizontalkulissen (31, 41) Rollen angeordnet sind.

9. Vorrichtung nach den Ansprüchen 1 bis 8, **dadurch gekennzeichnet, dass** die Tragkonsole (23) auch an den Horizontalkulissen (31, 41), entsprechend gedreht, angeordnet ist.

10. Vorrichtung nach den Ansprüchen 1 bis 9, **dadurch gekennzeichnet, dass** die Tragkonsolen (23) außerhalb des Anlagengehäuses (60) angeordnet sind.

## Claims

1. Portal device (1, 40) for shielding the interior of an installation housing of a processing installation (80) during the processing of a continuously running material strand (50), for fastening in the region of inlet and outlet openings of a processing installation (80) with an upper crossbeam (2), side beams (3, 4) adjoining the two ends of said crossbeam in a U-shaped manner and a table beam (5) which connects the lower free ends of the side beams (3, 4) and is adapted as a support for the material strand (50) or a conveyor belt (90), wherein a vertically displaceable vertical slotted guide (21) provided with a horizontally extending lower edge (22) is guided on the upper crossbeam (2) and is movable by means of vertical actuators (25), and horizontal slotted guides (31, 41) which are horizontally movable and displaceable by means of horizontal actuators (35, 45) are guided on the side beams (3, 4), wherein the horizontal slotted guides (31, 41) are mounted so as to be movable independently of the vertical slotted guide (21), and wherein the crossbeam (2) and the side beams (3, 4) are designed as a U-box-shaped housing, between the walls (11, 12) of which the vertical slotted guides (21) and the horizontal slotted guides (31, 41) are guided.

2. Device according to claim 1, **characterized in that** both the installation housing (60) and also the vertical (21) and horizontal slotted guides (31, 41) consist of material which is suitable for shielding.

3. Device according to claim 2, **characterized in that** both the installation housing (60) and also the vertical (21) and horizontal slotted guides (31, 41) consist of microwave-impermeable material.

4. Device according to claims 1 to 3, **characterized in that** the actuators (25, 35, 45) are designed as rack and pinion drives with servomotors.

5. Device according to claims 1 to 4, **characterized in that** a substantially horizontally projecting support bracket (23) is fastened in the region of the lower edge (22) of the vertical slotted guide (21), which in turn tensions a drag band (24) consisting of a flexible material which is impermeable to microwaves in such a way that it rests on a continuous strand of material so as to permit a relative movement.

6. Device according to claims 1 to 5, **characterized in that** the support bracket (23) has on its underside a plurality of shielding plates (26) which are spaced apart from one another and are essentially vertically aligned and extend over the width of the vertical slotted guide (21).

7. Device according to claims 1 to 6, **characterized in that** the horizontal slotted guides (31, 41) are mounted so as to be movable independently of one another.

8. Device according to claims 1 to 7, **characterized in that** rollers are arranged on the vertical (21) and/or the horizontal slotted guides (31, 41) for a rolling contact with the material strand (50).

9. Device according to claims 1 to 8, **characterized in that** the support bracket (23) is also arranged on the horizontal slotted guides (31, 41), rotated accordingly.

10. Device according to claims 1 to 9, **characterized in that** the support brackets (23) are arranged outside the installation housing (60).

## Revendications

1. Dispositif de portique (1, 40) pour le blindage de l'intérieur d'une enceinte d'installation d'une installation de traitement (80) lors du traitement d'un ruban de matière (50) circulant en continu,
destiné à être fixé dans la zone des ouvertures d'entrée, respectivement de sortie, de l'enceinte d'installation (60), comportant un longeron transversal supérieur (2), des longerons latéraux (3, 4) se raccordant en forme de U à ses deux extrémités et un longeron de table (5) qui relie les extrémités inférieures libres des longerons latéraux (3, 4) et qui est adapté à servir de support au ruban de matière (50) ou à une bande transporteuse (90),
dans lequel une coulisse verticale (21) pouvant coulisser verticalement et pourvue d'un bord inférieur (22) s'étendant horizontalement est guidée sur le longeron transversal supérieur (2) et mobile au moyen d'actionneurs verticaux (25), et des coulisses horizontales (31, 41) pouvant coulisser horizontalement sont guidées sur les longerons latéraux (3, 4) et peuvent coulisser au moyen d'actionneurs horizontaux (35, 45),
dans lequel les coulisses horizontales (31, 41) sont montés de manière à être mobiles indépendamment de la coulisse verticale (21) et dans lequel le longeron transversal (2) et les longerons latéraux (3, 4) sont réalisés sous la forme d'un boîtier en forme de caisson en U, entre les parois (11, 12) duquel la coulisse verticale (21) et les coulisses horizontales (31, 41) sont guidées.

2. Dispositif selon la revendication 1, **caractérisé en ce que** l'enceinte d'installation (60) de même que la coulisse verticale (21) et les coulisses horizontales (31, 41) sont constituées d'un matériau qui est approprié au blindage.

3. Dispositif selon la revendication 2, **caractérisé en ce que** l'enceinte d'installation (60) de même que la coulisse verticale (21) et les coulisses horizontales (31, 41) sont constituées d'un matériau imperméable aux micro-ondes.

4. Dispositif selon les revendications 1 à 3, **caractérisé en ce que** les actionneurs (25, 35, 45) sont réalisés sous la forme d'entraînements à crémaillère avec servomoteurs.

5. Dispositif selon les revendications 1 à 4, **caractérisé en ce que** dans la zone du bord inférieur (22) de la coulisse verticale (21) est fixée une console de support (23) faisant saillie sensiblement horizontalement, qui tend elle-même une bande suiveuse (24) en matériau flexible imperméable aux micro-ondes de telle sorte qu'elle repose sur un ruban de matière continu en permettant un mouvement relatif.

6. Dispositif selon les revendications 1 à 5, **caractérisé en ce que** la console de support (23) présente sur sa face inférieure plusieurs plaques de blindage (26) espacées les unes des autres, orientées sensiblement verticalement et s'étendant sur la largeur de la coulisse verticale (21).

7. Dispositif selon les revendications 1 à 6, **caractérisé en ce que** les coulisses horizontales (31, 41) sont montées de manière à être mobiles indépendamment l'une de l'autre.

8. Dispositif selon les revendications 1 à 7, **caractérisé en ce que** des rouleaux sont disposés sur la coulisse verticale (21) et/ou les coulisses horizontales (31, 41) pour un contact roulant avec le ruban de matière (50).

9. Dispositif selon les revendications 1 à 8, **caractérisé en ce que** la console de support (23) est également disposée, tournée en conséquence, sur les coulisses horizontales (31, 41).

10. Dispositif selon les revendications 1 à 9, **caractérisé en ce que** les consoles de support (23) sont disposées à l'extérieur de l'enceinte d'installation (60).
